# EUROPÄISCHE PATENTSCHRIFT

(11) **EP 2 297 451 B1**
(45) Veröffentlichungstag und Bekanntmachung des Hinweises auf die Patenterteilung: **30.01.2013**
(21) Anmeldenummer: 09776934.3
(22) Anmeldetag: 02.07.2009
(51) Int. Cl.: F03B 3/12

(54) **STRÖMUNGSWANDLER**
FLOW CONVERTER
CONVERTISSEUR D'ÉCOULEMENT

(30) Priorität: 10.07.2008 DE 102008032411
(43) Veröffentlichungstag der Anmeldung: 23.03.2011
(73) Patentinhaber: SIGNO-Erfinderverein Sachsen e.V., 04229 Leipzig (DE)
(72) Erfinder: SEYFARTH, Gerold, 04277 Leipzig (DE); HÖFGEN, Siegfried, 01920 Steina (DE); LANGLOTZ, Holger, 99867 Gotha (DE)
(74) Vertreter: Müller, Volkmar
(86) Internationale Anmeldenummer: PCT/EP2009/004803
(87) Internationale Veröffentlichungsnummer: WO 2010/003591

(56) Entgegenhaltungen:
- EP-A1- 1 641 101
- WO-A1-2005/111413
- WO-A2-2007/133538
- DE-A1-102004 039 817
- US-A- 4 722 665

## Beschreibung

Die Erfindung betrifft eine Vorrichtung zur Umwandlung von mechanischer in andere Energieformen, vorzugsweise in elektrische Energie. Dabei kann die als Strömungswandler bezeichnete Vorrichtung durch ihre kompakte Bauform mit integriertem Generator und einem gegebenenfalls notwendigem integrierten Getriebe und ihrer ebenfalls integrierten Lagerung in vielen Strömungsmedien zur Elektroenergieerzeugung eingesetzt werden. In einem Kegel mit am Umfang angeordneten spiralförmigen Schraubenblättern, welcher drehbar gegenüber einem Gehäuse auf der Bodenseite des Kegels gelagert ist, befinden sich die Einrichtungen zur Drehzahlübersetzung, zur Energieumwandlung und zur Abdichtung gegenüber dem Strömungsmedium.

Bekannt sind Turbinen zur Umwandlung von Wind- und Wasserkraft in Elektroenergie verschiedenster Größen und Bauausführungen, wie z.B in WO2007/133535.

Bekannt ist nach DE 297 21 671 U1 eine Schraube zur Aufnahme der Energie von fließendem Wasser oder bewegter Luft die sich durch 2-5 auf einen hohlen, mit dem Strömungsmedium flutbaren Kegel aufgebrachte umlaufende, einwindige Schraubenblätter auszeichnet, wobei der Durchmesser der Schraube gleich der Länge derselben entspricht und der Kegelboden halb so groß wie der Schraubendurchmesser ist.

Weiterhin ist nach US 4722665 eine Turbine bekannt, bei der in einem Hohlkugel ein Getriebe und mehrere Generatoren angeordnet sind und das Stromkabel über eine in Fließrichtung an der Kegelspitze angeordnete und die gesamte Turbinenkonstruktion tragende Hohlwelle nach außen geführt wird.

Auch sind nach US 1 191 950 und FR 557 189 zweifach außerhalb des kegelförmigem Turbinenkörpers gelagerte Kegelturbinen zur Wasserkraftnutzung bekannt.

In den Schritten US 188 020 und FR 827 487 werden einseitig außerhalb des kegelförmigen Turbinenkörpers gelagerte Kegelturbinen zur Windkraftnutzung beschrieben.

Mit WO 95 24562 ist eine Axialströmungsturbine bekannt, die aus einer Rotationseinheit und einer festen Einheit als Vorleiteinheit bestehen und sich in einem Rohrleitungssystem befinden und durch ihre Rumpf- sowie Blattgeometrie einen konstanten statiscben Druck in der Turbine ermöglichen.

Nach DE 20 2006 001 171 zählt ein Wasserkraft- Stromgenerator mit geringer Drehzahl zum Stand der Technik, der die Form einer beidseitig gelagerten zylindrischen Walze hat auf deren Umfang Paddel zur Wasserkraftaufnahme angeordnet sind.

Die nach DE 297 21 671 U1 beschriebene Turbine bietet zwar durch die äußere Gestaltung des Kegels die Möglichkeit zur Umwandlung der kinetischen Energie des Wassers und des Windes in eine Drehbewegung, kann aber bei der Übersetzung der Drehbewegung außerhalb der Turbine insbesondere bei treibgutbehafteten Fließmedien zu Blockierungen und Schäden im Übertrieb oder anderen Antriebselementen führen. Bei der Turbine nach US 4722665 wurden das Übersetzungsgetriebe und die Einrichtung zur Energieumwandlung vorteilhafterweise in den Turbinenkegel integriert, wobei die Lagerungshohlwelle an der spitzen Seite des Kegels entgegen der Strömungsrichtung angeordnet wurde, welches aber die Gefahr des Ansammelns von Treibgut vor der Turbine und in den Schaufeln der Turbine begünstigt. Durch die Gestaltung einer Welle kleinen Durchmessers, welche die Anströmung nicht behindert, kann die Übertragung größerer Drehmomente nicht erfolgen. Da der Wellenausgang in Strömungsrichtung angeordnet wurde, müssen die anzubringenden Dichtungen ebenfalls dem Staudruck standhalten, was technisch sehr aufwendig ist.

Auch die Turbinen nach US 1 191 950 und FR 557 189 haben Antriebs- und Lagerungselemente außerhalb des kegligen Turbinengrundkorpers. Hierdurch besteht wiederum die Gefahr des Allsammelns von Treibgut und der Beschädigung von Antriebselementen.

Die in den Schriften US 188 020 und FR 827 487 beschriebenen Anordnungen mit außen liegenden Lagerungen und Antrieben eignen sich aus genannten Gründen nur für die Windkraftutzung.

Eine beidseitig außerhalb des Grundkörpers gelagerte, in einem Rohr angeordnete Turbine nach WO 95 24562 eignet sich ebenfalls nur für saubere Fließmedien.

Auch der Wasserkraft- Stromgenerator nach DE 20 2006 001 171 mit beidseitig gelagerter Generatorwelle, ist sofern er mit der Achse im Strömungsmedium liegt, mit dem Nachteil behaftet, anfällig für Beschädigungen durch Treibgut zu sein.

Bisher wurden diese Art von Turbinen sowie auch die bekannten Hochleistungsturbinen mit Schutzeinrichtungen gegen Treibgut versehen, um eine Beschädigung zu verhindern.

Der Erfindung liegt die Aufgabe zugrunde, eine Turbine zu entwickeln, die durch eine kompakte Bauweise und ohne wesentliche Strömungshinternisse in allen Strömungsmedien zur effizienten Energieumwandlung eingesetzt werden kann, ohne dass zusätzliche Einrichtungen zur Treibgutabwehr notwendig sind.

Diese Aufgabe wird gemäß Anspruch 1 gelöst,

Dabei hat sich als äußerst vorteilhaft erwiesen, wenn die Einheit zur Energieumwandlung von mechanischer in elektrische Energie aus einem mit dcm Turbinenkegel fest verbundenen mit diesem rotierenden Magnetring und einem mit dem Gehäuse fest verbundenen fest stehenden Spulenkern im Turbinenkegel untergebracht ist.

Bei der Verwendung von Einheiten zur Drehzahlübersetzung hat sich die Verwendung von Planetengetrieben im Hohlraum von Turbinenkegel und Gehäuse als vorteilhaft erwiesen.

Gemäß einer weiteren Ausgestaltung der Erfindung ist es äußerst vorteilhaft, wenn die Einheiten zur Drehzahl und Energiewandlung aus Standardbaugruppen bestehen und diese im Hohlraum von Turbinenkegel und Gehäuse untergebracht werden können. Dabei ist es äußerst vorteilhaft, wenn der Generator als wassergekühlter Synchrongenerator der Schutzklasse IP 68 ausgebildet ist.

Bei Verwendung eines Standard- Planetengetriebes ist es vorteilhaft, wenn die Schmierung der Zahnräder durch einen Langzeitschmierstoff vorgenommen wird, was die Revisionsintervalle verringern.

Entsprechend des Anspruches 1 der Erfindung ist es vorteilhaft, dass der Turbinenkegel mit auf der Bodenseite des Kegels und gegenüber einem den Durchmesser des Kegelbodens nicht überschreitenden feststehenden Gehäuses gelagert und gegenüber diesem abgedichtet ist.

Dabei ist es besonders vorteilhaft, wenn mehre radial und axial wirkende Wellendichtungen zwischen dem feststehenden Gehäuse und dem sich drehenden Turbinenkegel angeordnet sind. Zwischen den zueinander feststehenden Bauelementen sind Flachdichtungen in ihrer Verwendung äußerst vorteilhaft. Durch die Dichtungen wird ein Eindringen von Strömungsmedium in den Hohlraum verhindert und die innen liegenden Einheiten vor Beschädigung geschützt.

Gemäß einer weiteren Ausgestaltung der Erfindung ist es äußerst vorteilhaft, wenn das Material von Turbine und Gehäuse aus korrosionsbeständigem Werkstoff gefertigt werden.

Dabei ist es besonders vorteilhaft, wenn der Turbinenkegel aus Kunststoff in einem Urformverfahren hergestellt und Elemente des Energieumwandlers bereits eingegossen werden.

Gemäß einer nicht beanspruchten Ausgestaltung im Einsatz als Strömungswalidler in sauberen Strömungsmedien ist es äußerst vorteilhaft, wenn Turbinenkegel mit aufgesetzten Schaufeln und das Gehäuse fest zueinander installiert sind, dabei der Turbinenkegel mit den Schaufeln als Vorleitrad dient und zwischen Turbinenkegel und Gehäuse ein drehbar angeordnetes Turbinenlaufrad angeordnet ist.

Dabei ist es besonders vorteilhaft, wenn das Turbinenlaufrad im Kerndurchmesser dem Kegelboden des Turbinenkegels entspricht, zumindest aber nicht überschreitet und die auf ihm angeordneten Schaufeln entgegengesetzt zu den Schaufeln des Vorleitrades steigend angeordnet sind.

Gemäß einer weiteren nicht beanspruchten Ausgestaltung ist es äußerst vorteilhaft, wenn das Gehäuse des Strömungswandlers aerodynamisch und um seine senkrechte Achse drehbar gestaltet ist. Dies ermöglicht dann die vorzugsweise Nutzung des Strömungswandlers als Windkraftanlage.

Gemäß einer weitere nicht beanspruchten Ausgestaltung ist es äußerst vorteilhaft, dass die Einzelteile des Turbinenkegels und des Gehäuses, aus Stahl gefertigt sind und die nicht beweglich zueinander angeordneten Baugruppen miteinander verschweißt wurden.

Gemäß einer weiteren nicht beanspruchten Ausgestaltung ist es äußerst vorteilhaft, dass alle mit dem Strömungsmedium in Berührung kommenden Flächen mit einem Korrosionsschutz versehen wurden.

Gemäß einer weiteren nicht beanspruchten Ausgestaltung ist es äußerst vorteilhaft, dass alle mit dem Strömungsmedium in Berührung kommenden Bauteile aus rostfreiem Stahl ausgeführt sein können.

Gemäß einer weiteren nicht beanspruchten Augestaltung ist es äußerst vorteilhaft, dass das Gehäuseunterteil in senkrechter Achse gegenüber dem Gehäuseoberteil und der Grundplatte verjüngt gestaltet sein kann.

Die Erfindung wird im Nachfolgenden anhand von Ausführungsbeispielen mit Bezug auf Positionsangaben in den Figuren genauer beschrieben.

Mit den Figuren wird folgendes dargestellt:
- Figur 1: Strömungswandler in Seitenansicht mit Kegel- und Gehäuseeinheit
- Figur 2: Strömungswandler im Seitenschnitt mit integrierter Einheit zur Drehzahlübersetzung und Energieumwandlung im Kegel mit eingesetztem Magnetring
- Figur 3: Strömungswandler im Seitenschnitt mit integrierter Einheit zur Drehzahlübersetzung und Energieumwandlung im Kegel mit eingegossenem Magnetring
- Figur 4: Strömungswandler im Seitenschnitt mit integrierter Einheit zur Drehzahlübersetzung und Energieumwandlung als Standardbaugruppen im Gehäuse
- Figur 5: Strömungswandler in Seitenansicht mit Kegelvorleitrad, Turbinenrad und Gehäuse
- Figur 6: Strömungswandler in Seitenansicht mit drehbarer Gehäuseachse
- Figur 7: Strömungswandler in Rückansicht mit schlankem Gehäusefuß

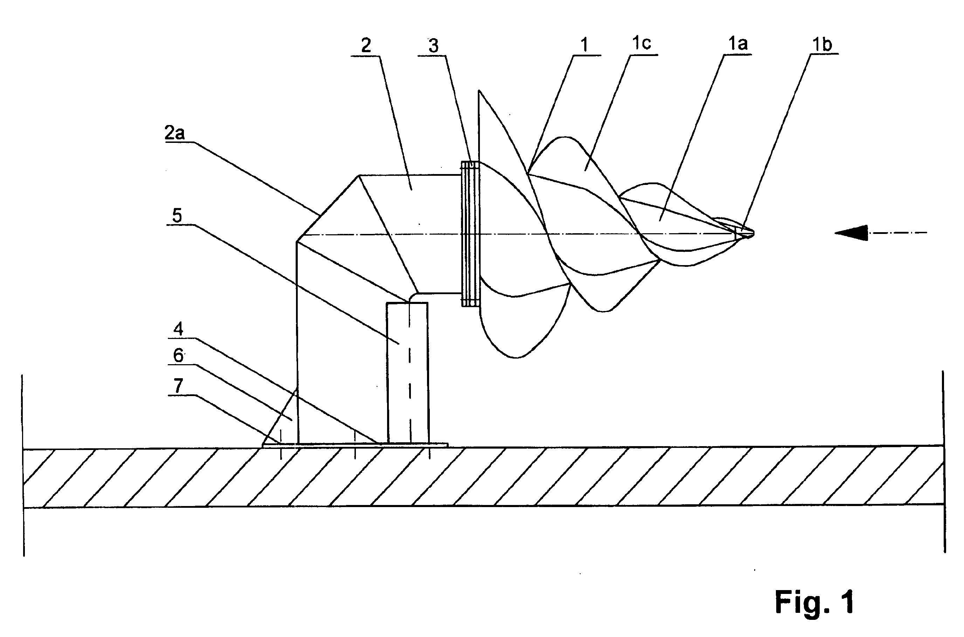

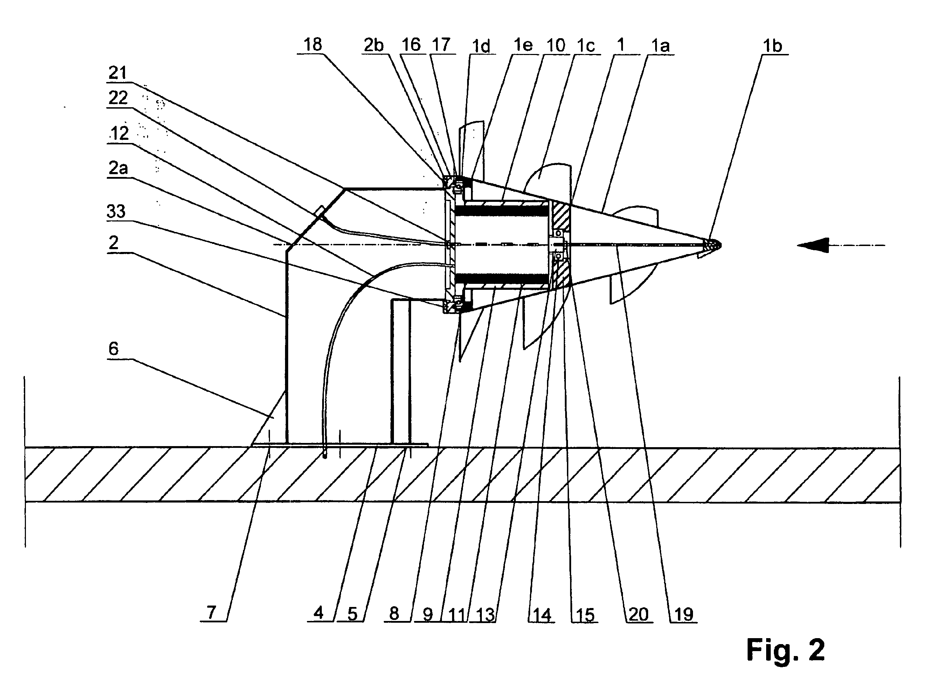

In einem ersten Ausführungsbeispiel, dargestellt in den Figuren 1 und 2, wurde ein Strömungswandler derart gestaltet, dass ein Turbinenkegel 1 bestehend aus einem Kegelmantel 1a und einer Kegelspitze 1b auf welchen mehrere, vorzugsweise drei, gleichmäßig versetzt angeordnete sich in Richtung Kegelspitze 1b verjüngende spiralförmige Schraubenwendeln 1c befinden und dieser Turbinenkegel 1 gegenüber einem feststehenden Gehäuse 2 drehbar gelagert ist. Zwischen dem vorzugsweise aus Stahl hergestellten Turbinenkegel 1 und dem ebenfalls aus Stahl bestehenden Gehäuses 2 sind mehrere Verbindungsflansche 3 angeordnet. Unten am Gehäuse 2 wurde zur Befestigung mit dem Untergrund eine Grundplatte 4 mit dem Gehäuse 2 fest verbunden, vorzugsweise dicht verschweißt. Am senkrecht angeordneten Fuß des Turbinengehäuses 2 befindet sich ein, mit dem Gehäuse 2 fest verbundener Strörnungskeil 5, der vorzugsweise aus einem abgewinkeltem, mit dem Gehäuse 2 verschweißen Stahlblech besteht, wobei der spitze Winkel entgegen der Anströmrichtung des Mediums weist.

Zur Stabilisierung des Gehäuses 2 im Fußbereich wurden mehrere Knotenbleche 6 zwischen Gehäuse 2 und Grundplatte 4 angebracht, vorzugsweise mit beiden Bauteilen verschweißt. Das Gehäuse 2 kann mit dem Strömungswandler über Befestigungselemente 7 als Fixierung gegenüber der Kraft des Strömungsmediums befestigt werden. Im Inneren des vom Turbinenkegel 1 und Gehäuse 2 gebildeten und gegenüber dem Strömungsmedium abgedichteten Hohlraums befinden sich ein, den Turbinenkegel 1 drehbar aufnehmendes Hauptlager 8, eine im Kegelmantel 1a untergebrachte Einheit zur Energieumwandlung, bestehend aus einem Magnetring 9, welcher in einer Magnetglocke 10 angeordnet und fest mit dem Turbinenkegel 1 verbunden ist, einem Spulenkern 11, der mit dem Turbinengehäuse 2 fest verbunden ist und ein Stromkabel 12 welches ausgehend vom Spulenkern 11 durch das abgedichtete Gehäuse 2 nach außen geführt wird. Am der Kegelspitze 1b zuweisenden Ende des Spulenkerns 11 wurde eine mit ihm fest verbundener Lagerzapfen 13 angeordnet. Auf ihm sitzt ein Gegenlager 14, vorzugsweise hier ein wartungsfreies Wälzlager. Durch das Hauptlager 8 und das Gegenlager 14 wird ein achssynchroner Lauf vom Magnetrotor 9 zum Spulenstator 11 gesichert.

Das Wälzlager 14 wird mit seinem Außenring in einem, mit dem Kegelmantel 1 a fest verbundenem Lagergehäuse 15 zentrisch zur Drehachse fixiert, wobei die Lagersitzbohrung im Lagergehäuse 15 achssynchron mit dem äußeren Zentriersitz 1d des Turbinenkegels 1, in welchem das Hauptlager 8 sitzt, eingebracht worden ist.

Zur Abdichtung des sich gegenüber dem Gehäuse 2 drehenden Turbinenkegels 1 wurden in der Einbauglocke 16 Dichtungspakete 17 untergebracht. Diese Dichtungen sind vorzugsweise als radial, und axial wirkende Wellendichtringe ausgerührt.

Zwischen den Ringen des Hauptlagers 8 und der Magnetglocke 10 einerseits und dem Lagerring des Hauptlagers 8 und dem Gehäuseflansch 2b andererseits wurden. Flachdichtungen 18 angebracht. Wellendichtungen 17 und Flachdichtungen 18 schützen die Einheit zur Energieumwandlung gegenüber Eindringen von Strömungsmedium.

Zur Kühlung des innen liegenden Generators wird eine zentrale Zuleitung 19 achsfluchtend angeordnet, wobei das Kühlmedium, welches vorzugsweise, mit dem Strömungsmedium identisch ist, von der Kegelsitze 1b aus in die Zuleitung 19 einströmt, am Lagerzapfen 13 eine drehbare Schlauchkupplung 20 passiert, im Spulenkern die entstehende Wärme aufnimmt und über eine feste Schlauchkupplung 21 in einen Abführungsschlauch 22, der über den Gehäusedeckel 2b nach außen gerührt wird, fließt. Zum Schutz der Oberfläche vor Beschädigung und Korrosion werden alle, mit dem Strömungsmedium in Kontakt kommenden Flächen des Turbinenkegels 1. 1 und des Gehäuses 2 mit einer Beschichtung versehen. Eine wahlweise Ausgestaltung des Ausführungsbeispiels 1 in einem korrosionsfreiem Stahl ist möglich.

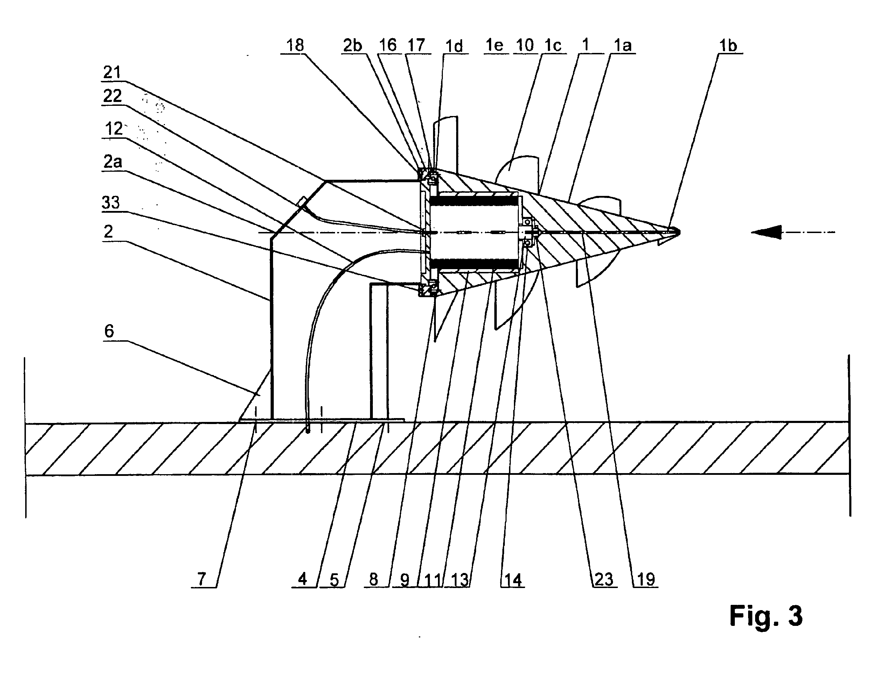

In einem zweiten, hier in Figur 3 dargestellten Beispiel, wurde der Turbinenkegel 1 komplett aus Kunststoff in einem Urformverfahren hergestellt und dabei der Magnetring 9, das Gegenlager 14 und Elemente zur Befestigung der Turbinenkegeleinheit am Hauptlager 8 bereits mit eingegossen. Dies erspart Fertigungsaufwand bei der Herstellung von Lagersitzen und eine zusätzliche Flachdichtung 18 zwischen Hauptlager 8 und Magnetrotor 9. Die Abdichtung zwischen rotierenden Turbinenkegel 1 und dem stehendem Lagerzapfen 13 erfolg über eine Gleitringdichtung 23.

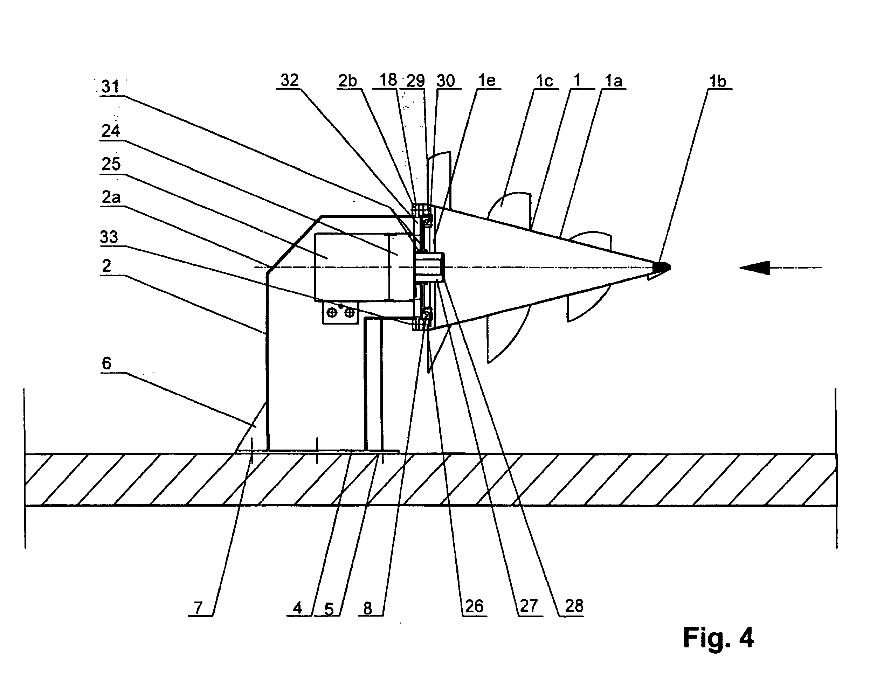

Mit einem dritten Ausführungsbeispiel, dargestellt in. Figur 4, kommt ein Strömungswandler zum Einsatz, in dessen Gehäuse 2 eine Einheit zur Drehzahlwandlung 24 und eine Einheit zur Energieumwandlung 25, welche beide miteinander mechanisch gekoppelt sind, untergebracht wurden. Beide Einheiten 24 und 25 bestehen dabei aus Standardbaugruppen. Die Drehmomentenaufnahme des mit dem Gehäuse 2 über einen Zentrierdeckel 26 starr verbundenen Getriebes 24, welches hier als kompaktes, wartungsarmes Planetengetriebe mit Langzeitöl ausgeführt wird, erfolgt über eine mit dem Kegelboden 1e des Turbinenkegels 1 fest verbundenen, vorzugsweise verschweißten Mitnehmerbuchse 27 an deren Ende sich ein Abschlussdeckel 28 befindet, der mit der Buchse 27 dicht verschweißt ist.

Der Generator 25, der hier als wassergekühlter Synchrongenerator ausgeführt ist, wurde mit dem Getriebe 24 derart verbunden, dass die vom Strömungswandler gelieferte Drehzahl im Getriebe 24 umgewandelt und auf den Generator 25 übertragen wird. Durch die Drehzahlwandlung wird eine Generatordrehzahl nahe der Synchrondrehzahl erreicht, was den Wirkungsgrad der Turbine erhöht. Die Verwendung ohne Getriebe ist bei entsprechender Generatorbauart ebenfalls möglich und wird ebenfalls beansprucht. Die Wasserkühlung des Generators 25 funktioniert unabhängig vom Strömungsmedium. Dadurch kann eine Temperaturreglung im Generator 25 so erfolgen, dass kein Tauwasser auftritt. Im Zentrierdeckel 26 befindet sich eine Gleitringdichtung 29. Sie schützt gemeinsam mit dem Axialwellendichtring 30 und den auf der Mitnehmerbuchse 27 sitzenden Radialwellendichtringen 31 das Getriebe 24 und den Generator 25 vor eindringendem Strömungsmedium. Die gesamte Turbinenkegeleinlieit wird mit dem Zentrierdeckel 26, und daran montiertem Getriebe 24 und Generator 25 in das Gehäuse 2 eingeschoben, gegenüber dem Zentrierflansch 32 zentriert und mit Schrauben 33 befestigt.

Wahlweise können in diesem Ausführungsbeispiel auch andere Generatoren wie Asynchrongeneratoren und Lineargeneratorenjeweils mit und ohne Getriebe Verwendung finden.

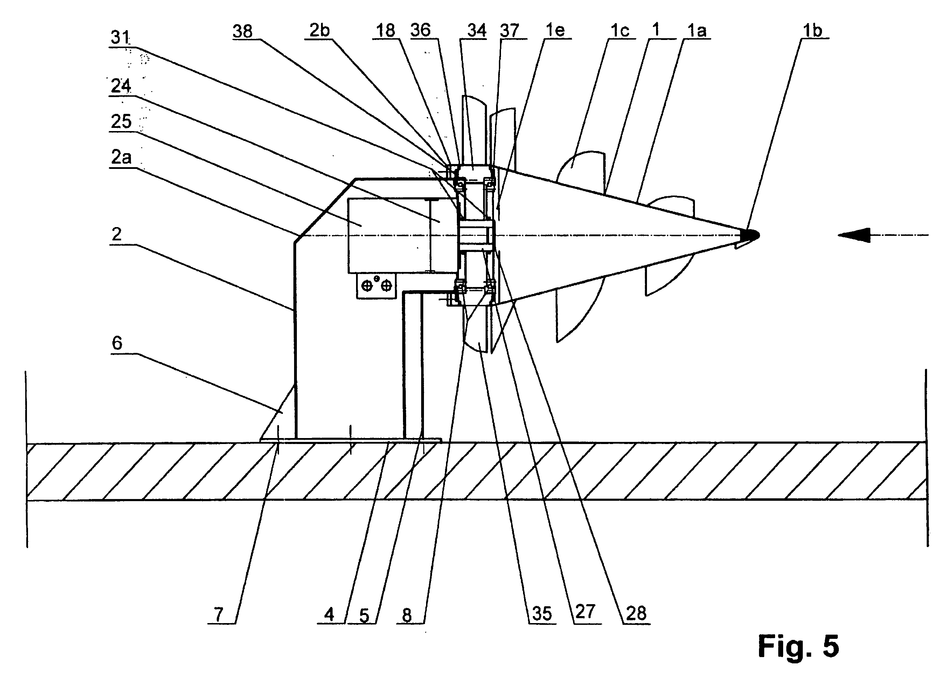

In einem vierten Ausführungsbeispiel, siehe Figur 5, ist der Turbinenkegell 1 starr mit dem Gehäuse 2 verbunden. Hinter dem Turbinenkegel 1, der hier als Vorleitrad dient, befindet sich ein, die Strömung in Drehbewegung umwandelndes Turbinenlaufrad 34. Das Turbinenlaufrad 34 besitzt mehrere am Umfang angeordnete Schaufeln 35, die entgegengesetzt steigend zu denen des Turbinenkegels angeordnet und in ihrer Höhe denen der Maximalhöhe derer auf dem Kegel befindlichen entspricht. Der Kerndurchmesser des Laufrades 34 überschreitet dabei nicht den Durchmesser des Kegelbodens 1e. Die Drehbewegung des Turbinenlaufrades wird durch ein Lagerungssystem aus zwei Hauptlagern 8 nach innen in den Hohlraum von Gehäuse 2 und Turbinenkegel 1 geführt, in welchem die Einheiten zur Drehzahl- und Energieumwandlung untergebracht sind. Die Abdichtung von sich drehendem Laufrad 34 und feststehendem Gehäuse 2 und Turbinenkegel 1 erfolgt über Labyrinthdichtungen 36, Radialwellendichtringe 37 und Gleitringdichtungen 38.

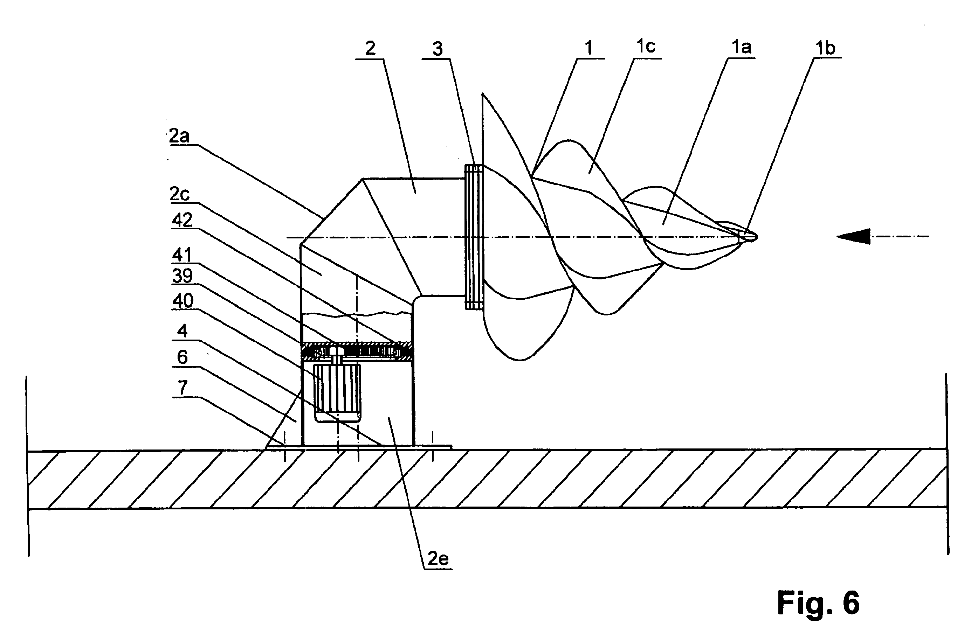

Bei einem fünften Ausführungsbeispiel, in Figur 6 dargestellt, wird die Drehung des Strömungswandlers zum die senkrechte Gehäuseachse ermöglicht. Dazu wird das Gehäuse 2 zylindrisch ausgeführt. Zwischen dem Gehäuseoberteil 2c und dem Gehäuseunterteil 2d ist ein Kranzlager 39 angeordnet. Der Innenring des Kranzlagers 39 ist mit einer Innenverzahnung versehen. In diese greift ein über einen Motor 40 angetriebenes Ritzel 41 ein und bewegt das gesamte Turbinenoberteil gegenüber dem feststehenden Gehäuseunterteil 2d. Für den Einsatz als Turbine zur Windkraftnutzung kann die Kegelspitze 1b so stets gegen die Windanströmung geführt werden. Bei einer Nutzung der Turbine nach vorliegenden Beispiel in flüssigen Medien ist auch an dieser Drehstelle eine Einrichtung zur Abdichtung des Gehäuseoberteils 2c gegenüber dem Gehäuseunterteil 2d mittels Dichtungspaket 42 bestehend aus mehrere Einzeldichtungen notwendig.

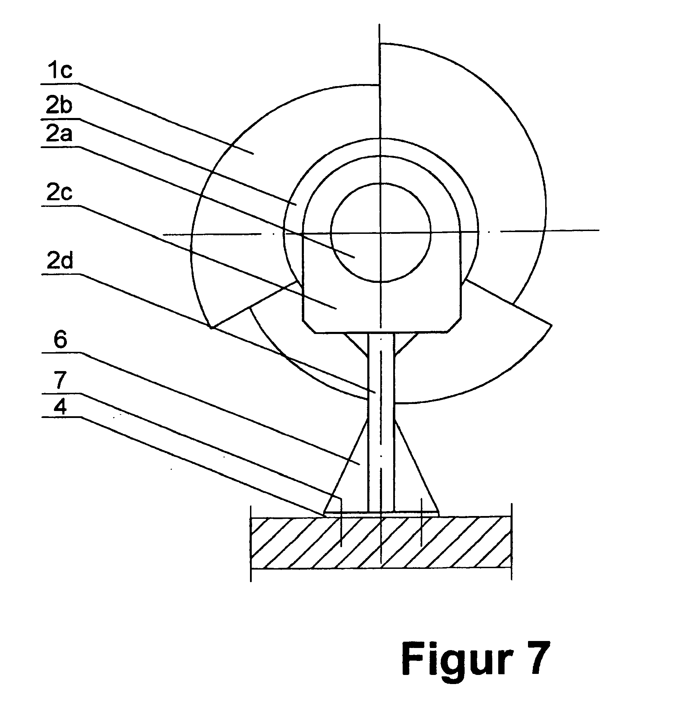

In einem sechsten Beispiel, welches in Figur 7 dargestellt wurde, werden die Einheiten zur Drehzahl- und Energieumwandlung im Holraum von Turbinenkegel 1 und Gehäuseoberteil 2c untergebracht und mit Dichtungen gegenüber dem Strömungsmedium geschützt. Das Gehäusewiterteil 2d wurde hier in Richtung Grundplatte 4 quer zur Achsrichtung verjüngt und mit Knotenbleche 6 versteift. Durch diese Ausgestaltungsvariante fällt der Strömungskeil 5 weg.

Kombinationen zwischen den Ausführungsbeispielen sind möglich und werden ebenfalls beansprucht.

### Bezugszeichenliste

- 1: Turbinenkegel
1a Kegelmantel
1 b Kegelspitze
1c Schraubenwendel
1d äußerer Zentriersitz
1e Kegelboden
- 2: Gehäuse, Turbinengehäuse
2a Montageklappe, Revisionsklappe
2b Gehäuseflansch
2c Gehäuseoberteil
2d Gehäuseunterteil
- 3: Verbindungsflansch
- 4: Grundplatte
- 5: Strömungskeil
- 6: Knotenblech
- 7: Verbindungselement, Schraube
- 8: Hauptlager
- 9: Magnetring, Magnetrotor
- 10: Magnetglocke
- 11: Spulenkern, Spulenstator
- 12: Stromkabel, Kabel
- 13: Lagerzapfen
- 14: Gegenlager, Wälzlager
- 15: Lagergehäuse
- 16: Einbauglocke
- 17: Dichtungspaket, Wellendichtung
- 18: Flachdichtung
- 19: zentrale Zuleitung für Wasserkühlung, Zuleitungskanal
- 20: Schlauchkupplung drehbar
- 21: Schlauchkupplung fest
- 22: Abführungsschlauch
- 23: Gleitringdichtung
- 24: Einheit zur Drehzahlübersetzung, Getriebe
- 25: Einheit zur Energieuznwandlung, Generator
- 26: Zentrierdeckel
- 27: Mitnehmerbuchse
- 28: Abschlussdeckel
- 29: Gleitringdichtung
- 30: Wellendichtring, axial wirkend, Axialwellendichtring
- 31: Wellendichtring, radial wirkend, Radialwellendichtring
- 32: Zentrierflansch
- 33: Schraube
- 34: Turbinenlaufrad, Laufrad
- 35: Schaufeln, Turbinenschaufeln
- 36: Labyrinthdichtung
- 37: Radialwellendichtring Turbinenlaufrad
- 38: Gleitringdichtung Turbinenlaufrad
- 39: Kranzlager
- 40: Motor, Azimutmotor
- 41: Ritzel
- 42: Dichtungspaket für Kranzlager

## Patentansprüche

1. Snömungswandler bestehend aus einem sich durch das Strömungsmedium drehenden Turbinenkegel (1) mit am Umfang angeordneten, spiralförmigen Schraubenblättern (1c) und einem feststehenden Gehäuse (2),
wobei der Turbinenkegel (1) auf der Bodenseite des Kegels gegenüber einem, den Durchmesser des Kegelbodens 1e nicht überschreitenden, Gehäuse (2) drchbar gelagert und abgedichtet ist, so dass Einheiten zur effizienten Drehzahltunwandlung (24) und Energieumwand (25) in dem dadurch gebildeten Hohlraum untergebracht und wirksam vor Eindringen des Strömungsmediums geschützt, Treibgut durch die Bauform vom Strömungswandler weggeleitet und große Leistungen übertragen werden können, **dadurch gekennzeichnet, dass** eine Kühlung des sich im Inneren befindlichen Generators über eine zentrale Kühleinrichtung erfolgt, welche aus einem zentralen Zuleitungskanal (19) und einem Abführungschlauch (22) besteht, die mittels drehbarer Schlauchkupplung (20) und fester Schlauchlcupplung (21) mit dem Spulenkern (11) verbunden sind.

2. Strömungswandler nach Anspruch 1,
**dadurch gekennzeichnet, dass** die Einheit zur Energieumwandlung aus einem mit dem Turbinenkegel (1) fest verbundenen und somit angetriebenen Magnetrotor (9) und einem fest mit dem Gehäuse (2) verbundenen Spulenkern (11) besteht.

3. Strömungswandler nach Ansprüchen 1 und 2,
**dadurch gekennzeichnet, dass** sich. mehrere Magnete am Umfang der Magnetglocke (10) befinden und diese gemeinsam den rotierenden Magnetring (9) bilden.

4. Strömungswandler nach Anspruch 1,
**dadurch gekennzeichnet, dass** die zur Abdichtung wischen Turbinenkegel (1) und Gehäuse (2) notwendigen Wellendichtungen (17) in einer im Durchmesser den Kegelboden 1e nicht überschreitenden Einbauglocke (16) und Flachdichtungen (18) zwischen dem Gehäuseflansch (2b) der Magnetglocke (10) und dem Zentrierflansch (26) untergebracht sind.

5. Strömungswandler nach Anspruch 1,
**dadurch gekennzeichnet, dass** sich am unteren Teil des Gehäuses (2) eine Grundplatte (4) und entgegengesetzt der Anströmungsrichtung ein Strömungskeil (5) befinden, die jeweils fest mit dem Gehäuse (2) verbunden sind.

6. Strömungswandler nach Anspruch 1,
**dadurch gekennzeichnet, dass** der Turbinenkegel (1) aus einem dem Strömungsmedium widerstehenden Kunststoff besteben kann, in einem Urformverfahren hergestellt wurde und dabei Elemente des Energieumwandlers (25) vorzugsweise der Magnetring (9) eingegossen wurde.

7. Strömungswandler nach Anspruch 1,
**dadurch gekennzeichnet, dass** die Einheiten zur Drehzahlumwandlung (24) und Energieumwandlung (25) aus Standardbaugruppen bestehen können, wobei das Getriebe (24) vorzugsweise als wartungsarmes Planetengetriebe und der Generator (25) vorzugsweise als wassergekühlter Synchrongenerator ausgeführt ist.

8. Strömungswandler nach Ansprüchen 1 und 7,
**dadurch gekennzeichnet, dass** die Einheiten zur Energieumwandlung (25) als Asynchrongenerator ausgeführt sein kann.

9. Strömungswandler nach Ansprüchen 1 und 7,
**dadurch gekennzeichnet, dass** die Einheiten zur Energieumwandlung (25) als ringförmig angeordnete Lineargenerator ausgeführt sein kann.

10. Strömungswandler nach Anspruch 1,
**dadurch gekennzeichnet, dass** das zylindrische Gehäuse (2) in ein feststehendes Gehäuseunterteil (2d) und ein schwenkbares Gehäuseoberteil (1c) unterteilt werden kann.

11. Strömungswandler nach Ansprüchen 1 und 10,
**dadurch gekennzeichnet, dass** sich zwischen Gehäuseunterteil (2d) und Gehäuseoberteil (2c) ein mit Innenzahnkranz versehenes Kranzlager (39) befindet, welches am Außenring mit dem feststehenden Teil (2d) starr und am Innenring fest mit dem Gehäuseoberteil (2c) verbunden ist.

12. Strömungswandler nach Ansprüchen 1, 10 und 11,
**dadurch gekennzeichnet, dass** in den Zahnkranz des Kranzlagers (39) ein Ritzel (41) eingreift, welches über einen Motor (40) angetrieben wird.

13. Strömungswandler nach Ansprüchen 1 und 10,
**dadurch gekennzeichnet, dass** ein zwischen dem Gehäuseunterteil (2d) und Gehäuseoberteil (2c) befindliches Dichtungspaket (42) das Eindringen von Strömungsmedium in das Gehäuse (2) verhindert.

14. Strömungswandler nach Ansprüchen 1 und 13,
**dadurch gekennzeichnet, dass** die Abdichtung des sich drehenden Laufrades (34) gegenüber Gehäuse (2) und Turbinenkegel (1) über Labyrinthdichtungen (36), Radialwellendichtringe (37) und Gleitringdichtungen (38) erfolgt.

## Claims

1. A fluid torque converter, consisting of a rotating turbine cone (1) which has spiral-shaped screw blades arranged at its circumference (1c), and which has a stationary casing (2), whereby the turbine cone (1) runs on a bearing at its cone base and is therefore able to rotate against a casing (2), whose dimensions do not exceed the diameter of the cone base 1e, and sealed against it, so that the units for an efficient torque conversion (24) and energy transmission (25) can be arranged in the hollow space resulting from this design and efficiently protected against penetrating fluid medium, flotsam can be deflected from the torque converter by the design, and high power can be transmitted, **characterized in that** the generator located inside is cooled by a centralized cooling unit, which consists of a central feeder (19) and a discharge hose (22), which are both connected with the coil core (11) via a rotating hose coupling (20) and a stationary hose coupling (21).

2. Fluid torque converter in accordance with Claim 1,
**characterized in that** the unit for energy conversion consists of a magnetic rotor (9), which is mounted to the turbine cone (1) and thus driven by it, and of a stationary coil core (11) mounted to the casing (2).

3. Fluid torque converter in accordance with any of Claims 1 or 2,
**characterized in that** a number of magnets are arranged on the circumference of the magnetic bell (10) and, together form the rotating magnetic ring (9).

4. Fluid torque converter in accordance with Claim 1,
**characterized in that** the shaft seals (17) providing the sealing effect between turbine cone (1) and casing (2) are encompassed in an integrated bell (16) whose dimensions do not exceed the diameter of the cone base 1 e, and flat seals (18) between the casing flange (2b), the magnetic bell (10, and the centring flange (26).

5. Fluid torque converter in accordance with Claim 1,
**characterized in that** the bottom section of the casing (2) has a base plate (4) and a flow wedge (5) opposite the flow direction, both of which are mounted to the casing (2).

6. Fluid torque converter in accordance with Claim 1,
**characterized in that** the turbine cone (19 can be made of a polymer, which is resistant against the flow medium and produced in a particulate process, during which the elements of which the energy converter (25) consists, preferably the magnetic ring (9), is being sealed in.

7. Fluid torque converter in accordance with Claim 1,
**characterized in that** the unit for torque conversion (24) and energy conversion (25) can be made of standard modules, whereby the gear transmission (24) is preferably designed as a planetary gear unit requiring but little maintenance, and the generator (25) is preferably designed as water-cooled synchronous alternator.

8. Fluid torque converter in accordance with any of Claims 1 or 7,
**characterized in that** the units for energy conversion (25) can be designed as an asychronous generator.

9. Fluid torque converter in accordance with any of Claims 1 or 7,
**characterized in that** the units for energy conversion (25) can be designed as linear generator which is arranged in a ring-shaped form.

10. Fluid torque converter in accordance with Claim 1,
**characterized in that** the cylindrical casing (2) can be subdivided into a stationary casing bottom part (2d) and a pivotable casing top part (1c).

11. Fluid torque converter in accordance with any of Claims 1 or 10,
**characterized in that** there is a toothed bearing provided with internal ring gear between the casing bottom part (2d) and casing top part (2c), and that the bearing is linked, with its external ring, to the stationary part (2d) in a rigid manner, while its inner ring is mounted to the casing top part (2c).

12. Fluid torque converter in accordance with any of Claims 1, 10, or 11,
**characterized in that** a pinion (41), which is driven by a motor (40), engages into the crown gear of the toothed bearing (39).

13. Fluid torque converter in accordance with any of Claims 1 or 10,
**characterised in that** a seal pack (42) located between casing bottom part (2d) and casing top part (2c) prevents the penetration of fluid medium into the casing (2).

14. Fluid torque converter in accordance with any of Claims 1 or 13,
**characterized in that** labyrinth seals (36), radial shaft seals (37), and axial face seals (38) provide the sealing effect between the rotating impeller, on the one hand, and, on the other, the casing (2) and the turbine cone (1).

## Revendications

1. Convertisseur de couple hydraulique composé d'un cône de turbine (1) tournant par l'effet de l'écoulement du fluide avec des pales d'hélice (1c) en forme de spirale, disposées à la périphérie et un boîtier fixe (2), le cône de turbine (1) étant monté sur pivot au fond du cône vis-à-vis d'un boîtier (2) ne dépassant pas le diamètre du fond du cône le et rendu étanche, de sorte que les unités pour conversion de vitesse (24) efficace et conversion de l'énergie (25) puisse être placées dans la cavité ainsi formée et protégées efficacement contre la pénétration du fluide, que le matériau moteur puisse être dérivé par la forme de construction du convertisseur de couple hydraulique et de grosses puissances être transmises, donc caractérisé de sorte qu'un refroidissement du générateur se trouvant à l'intérieur s'effectue par un dispositif de réfrigération central, qui consiste en un canal d'alimentation (19) central et un tuyau d'évacuation (22), qui sont reliés au moyen de raccord symétrique pour tuyaux flexibles rotatif (20) et d'un raccord symétrique pour tuyaux flexibles fixe (21) avec le moyeu de bobine (11).

2. Convertisseur de couple hydraulique d'après l'exigence 1,
donc caractérisé de sorte que l'unité pour conversion de l'énergie se compose d'un rotor magnétique (9) ainsi commandé et relié fixement au cône de turbine (1) et d'un moyeu de bobine (11) relié fixement au boîtier (2).

3. Convertisseur de couple hydraulique d'après les exigences 1 et 2,
donc caractérisé de sorte que plusieurs aimants soient placés à la périphérie de la cloche magnétique (10) et qu'ils forment ensemble l'anneau magnétique rotatif (9).

4. Convertisseur de couple hydraulique d'après l'exigence 1,
donc caractérisé de sorte que les garnitures étanches (17) nécessaires à l'étanchéité entre le cône de turbine (1) et le boîtier (2) soient placées dans une cloche encastrée (16) ne dépassant pas le diamètre du fond du cône le et les joints plats (18) entre la bride du boîtier (2b), la cloche magnétique (10) et la bride de centrage (26).

5. Convertisseur de couple hydraulique d'après l'exigence 1,
donc caractérisé de sorte qu'à la partie inférieur du boîtier (2) se trouvent une plaque d'assise (4) et à l'opposé du sens de l'écoulement une clavette d'arrêt (5), qui sont reliés fixement au boîtier (2).

6. Convertisseur de couple hydraulique d'après l'exigence 1,
donc caractérisé de sorte que le cône de turbine (1) puisse se composer d'une matière synthétique résistante au fluide d'écoulement, ait été fabriqué dans un procédé de formage initial et à cet effet les éléments du convertisseur de l'énergie (25), de préférence l'anneau magnétique (9) aient été coulés.

7. Convertisseur de couple hydraulique d'après l'exigence 1,
donc caractérisé de sorte que les unités pour conversion de vitesse (24) et conversion de l'énergie (25) puissent se composer de sous-groupes standard, à cette occasion l'engrenage (24) est construit de préférence comme engrenage planétaire pratiquement sans entretien et le générateur (25) est de préférence un modèle d'alternateur synchrone refroidi à l'eau.

8. Convertisseur de couple hydraulique d'après les exigences 1 et 7,
donc caractérisé de sorte que les unités pour conversion de l'énergie (25) puissent être un modèle d'alternateur asynchrone.

9. Convertisseur de couple hydraulique d'après les exigences 1 et 7,
donc caractérisé de sorte que les unités pour conversion de l'énergie (25) puissent être un modèle d'alternateur linéaire placé en forme d'anneau.

10. Convertisseur de couple hydraulique d'après l'exigence 1,
donc caractérisé de sorte que le boîtier (2) cylindrique puisse être divisé en une partie inférieure du boîtier fixe (2d) et une partie supérieure du boîtier pivotante (1c).

11. Convertisseur de couple hydraulique d'après les exigences 1 et 10,
donc caractérisé de sorte qu'il se trouve entre la partie inférieure du boîtier (2d) et la partie supérieure du boîtier (2c) un palier couronne équipé d'une couronne à denture intérieure (39), qui est reliée de façon rigide à l'anneau extérieur avec la partie fixe (2d) et à l'anneau intérieure de façon fixe avec la partie supérieure du boîtier (2c).

12. Convertisseur de couple hydraulique d'après les exigences 1, 10 et 11,
donc caractérisé de sorte que dans la couronne à denture du palier couronne (39) s'encliquette un pignon (41), qui est commandé par un moteur (40).

13. Convertisseur de couple hydraulique d'après les exigences 1 et 10,
donc caractérisé de sorte qu'une garniture d'étanchéité (42) se trouvant entre la partie inférieure du boîtier (2d) et la partie supérieure du boîtier (2c) empêche la pénétration du fluide dans le boîtier (2).

14. Convertisseur de couple hydraulique d'après les exigences 1 et 13,
donc caractérisé de sorte que l'étanchéité de la roue mobile rotative (34) par rapport au boîtier (2) et au cône de turbine (1) soit produite par les garnitures en labyrinthe (36), les joints pour arbre tournant (37) et les garnitures étanches à anneau glissant (38).
